# EUROPEAN PATENT APPLICATION

(11) **EP 4 539 498 A1**
(43) Date of publication of application: **16.04.2025**
(21) Application number: 23202389.5
(22) Date of filing: 09.10.2023
(51) Int. Cl.: H04R 1/10

(54) **HEADSET ARRANGEMENT**

(71) Applicant: Harman Becker Automotive Systems GmbH, 76307 Karlsbad (DE)
(72) Inventor: PANTHER, Heiko, 85748 Garching (DE); RASMUSSEN, Claus Mygind, 7400 Herning (DK)
(74) Representative: Westphal, Mussgnug & Partner, Patentanwälte mbB

(57) **Abstract**

A headset arrangement comprises a plurality of headsets in a listening environment, each headset in the plurality of headsets comprising one or more loudspeakers, each of the one or more loudspeakers being configured to radiate sound that corresponds to a sound signal towards at least one of two listening positions related to a user of the respective headset, each of the two listening positions being located at an entrance of an ear canal of the respective user, one or more second microphones, each of the one or more second microphones being configured to pick up noise radiated by at least one noise source via a primary path to at least one of the two listening positions, and a first microphone configured to capture speech originating from the user related to the respective headset, wherein the headset arrangement is configured to capture speech originating from a first user related to a first headset in the plurality of headsets by means of the first microphone of the first headset, transmit the captured speech from the first headset to one or more other headsets in the plurality of headsets, reproduce the transmitted speech at respective listening positions related to users of the respective one or more other headsets by means of the one or more loudspeakers of the one or more other headsets, and cancel speech originating from the first user and being transmitted to the listening positions related to users of the respective one or more other headsets via a primary path by means of passive noise cancellation and/or an active noise cancellation method.

## Description

### TECHNICAL FIELD

The disclosure relates to a headset arrangement, in particular to a headset arrangement comprising two or more headsets in a listening environment.

### BACKGROUND

In an arrangement comprising two or more headsets in a listening environment, speech originating from a first user related to a first headset of the two or more headsets is transmitted to one or more other users related to a second and any further headsets of the two or more headsets directly. Further, the speech originating from the first user is captured by a microphone of the first headset, transmitted to the second and any further headsets of the two or more headsets, and is output by one or more loudspeakers of the respective second or further headsets. That is, other users will receive speech originating from the first user twice. The speech provided to other users via the headsets may be delayed as compared to the speech being transmitted directly. This is because processing and transmitting the speech may require a certain amount of time while the directly transmitted speech travels through air comparably fast. It is, however, also possible that the speech transmitted via the headset reaches another user before the directly transmitted speech (e.g., if users are arranged at a great distance from each other). Both may result in an unwanted "echo" effect, where the speech received at a later point in time is perceived as an echo of the speech received at an earlier point in time.

There is a need for a headset arrangement and a method that reduce or even avoid an echo effect, resulting in a distraction free communication between different users of the headset arrangement.

### SUMMARY

A headset arrangement includes a plurality of headsets in a listening environment, each headset in the plurality of headsets including one or more loudspeakers, each of the one or more loudspeakers being configured to radiate sound that corresponds to a sound signal towards at least one of two listening positions related to a user of the respective headset, each of the two listening positions being located at an entrance of an ear canal of the respective user, one or more second microphones, each of the one or more second microphones being configured to pick up noise radiated by at least one noise source via a primary path to at least one of the two listening positions, and a first microphone configured to capture speech originating from the user related to the respective headset, wherein the headset arrangement is configured to capture speech originating from a first user related to a first headset in the plurality of headsets by means of the first microphone of the first headset, transmit the captured speech from the first headset to one or more other headsets in the plurality of headsets, reproduce the transmitted speech at respective listening positions related to users of the respective one or more other headsets by means of the one or more loudspeakers of the one or more other headsets, and cancel speech originating from the first user and being transmitted to the listening positions related to users of the respective one or more other headsets via a primary path by means of passive noise cancellation and/or an active noise cancellation method.

A method for operating a headset arrangement is disclosed herein. The headset arrangement includes a plurality of headsets in a listening environment, each headset in the plurality of headsets including one or more loudspeakers, each of the one or more loudspeakers being configured to radiate sound that corresponds to a sound signal towards at least one of two listening positions related to a user of the respective headset, each of the two listening positions being located at an entrance of an ear canal of the respective user, one or more second microphones, each of the one or more second microphones being configured to pick up noise radiated by at least one noise source via a primary path to at least one of the two listening positions, and a first microphone configured to capture speech originating from the user related to the respective headset. The method includes capturing speech originating from a first user related to a first headset in the plurality of headsets by means of the first microphone of the first headset, transmitting the captured speech from the first headset to one or more other headsets in the plurality of headsets, reproducing the transmitted speech at respective listening positions related to users of the respective one or more other headsets by means of the one or more loudspeakers of the one or more other headsets, and cancelling speech originating from the first user and being transmitted to the listening positions related to users of the respective one or more other headsets via a primary path by means of passive noise cancellation and/or an active noise cancellation method.

Other systems, features and advantages of the disclosure will be or will become apparent to one with skill in the art upon examination of the following detailed description and figures. It is intended that all such additional systems, methods, features and advantages included within this description, be within the scope of the invention and be protected by the following claims.

### BRIEF DESCRIPTION OF THE DRAWINGS

The arrangements and methods may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates a headset arrangement comprising a plurality of headsets arranged in a listening environment.
Figure 2 schematically illustrates speech transmitted between users of the headset arrangement.
Figure 3 schematically illustrates speech transmitted between users of the headset arrangement via a secondary path.
Figure 4, including Figures 4A and 4B, schematically illustrates different steps of a method according to embodiments of the disclosure.
Figure 5, including Figures 5A and 5B, schematically illustrates different steps of another method according to embodiments of the disclosure.
Figure 6 schematically illustrates a method according to embodiments of the disclosure.

### DETAILED DESCRIPTION

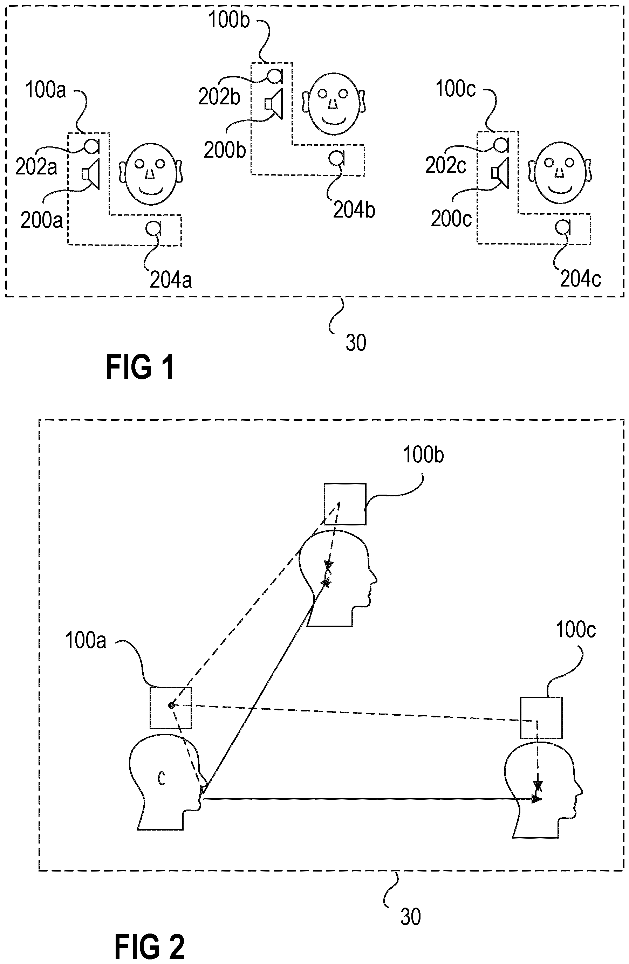

The headset arrangement and related method according to the various embodiments described herein assist users of the headset arrangement in communication with each other without experiencing unwanted distractions due to an echo effect. Figure 1 schematically illustrates a headset arrangement comprising a plurality of headsets 100. In the example illustrated in Figure 1, the headset arrangement comprises three headsets 100a, 100b, 100c. Generally, however, a headset arrangement may comprise only two, three or even more than three individual headsets 100. Each headset 100 in the plurality of headsets 100 comprises one or more loudspeakers 200, each of the one or more loudspeakers 200 being configured to radiate sound that corresponds to a sound signal towards at least one of two listening positions related to a user of the respective headset 100, each of the two listening positions being located at an entrance of an ear canal of the respective user. According to one example, a headset 100 comprises a single loudspeaker 200 that radiates sounds towards both ears of a respective user. It is, however, also possible that a headset 100 comprises separate loudspeakers 200 for the different listening positions. That is, one or more loudspeakers 200 may be configured to radiate sound towards a first ear of the respective user, and one or more loudspeakers 200 may be configured to radiate sound towards a second ear of the respective user. Each headset 100 in the plurality of headsets 100 further comprises one or more second microphones 202, each of the one or more second microphones 202 being configured to pick up noise radiated by at least one noise source via a primary path to at least one of the two listening positions, and a first microphone 204 configured to capture speech originating from the user related to the respective headset 100. For example, each headset 100 of the plurality of headsets 100 may comprise a microphone boom arm, and the first microphone 204 of a headset 100 may be arranged in the microphone boom arm. The first microphone 204, however, may be attached to the respective headset 100 in any other suitable way. According to another example, the first microphone 204 is arranged in or attached to a cable or cord attached to the respective headset 100. It is, however, also possible that the first microphone 204 is not directly or indirectly attached to the respective headset 100 at all. According to other examples, the first microphone 204 may be attached to clothes or devices worn by the respective user (e.g., devices worn on the head, neck, or shoulders).

Headsets 100 can generally be implemented in many different ways. Some headsets comprise ear cups that are arranged to cover or surround the ears of the respective user. In this case, the one or more loudspeakers 200 and the one or more second microphones 202 may be arranged in the respective ear cups. Other headsets 100 comprise ear buds that may be at least partly inserted into an ear canal of a user. In this case, the one or more loudspeakers 200 and the one or more second microphones 202 may be arranged in the ear buds. Other headset are known that comprise different support structures that can be used to position the one or more loudspeakers 200 and the one or more second microphones 202 with respect to the user's ears (e.g., a headband or neck band). It is even possible that the one or more loudspeakers 200 and the one or more second microphones 202 are arranged in a headrest of a vehicle, for example. Different headsets in the plurality of headsets may be identical or may differ from each other. That is, it is generally possible that one headset comprises ear cups, while another headset comprises ear buds. Any other combination of different headsets is generally possible.

The plurality of headsets 100 are all arranged in the same listening environment 30. The listening environment 30 may be a passenger compartment of a vehicle, a room, or hall, for example. According to one example, a headset arrangement as is disclosed herein may be used for a multi-player gaming event, where multiple players of a video game are located in one and the same room and wish to communicate with each other. This, however, is only one example.

In an arrangement comprising two or more headsets 100 in a listening environment 30, speech originating from a first user related to a first headset 100a of the two or more headsets 100a, 100b, 100c is transmitted to one or more other users related to a second and any further headsets 100b, 100c of the two or more headsets 100 directly through free air (primary path). Further, the speech originating from the first user is captured by the first microphone 204a of the first headset 100a, transmitted to the second and any further headsets 100b, 100c of the two or more headsets 100, and is output by one or more loudspeakers 200b, 200c of the respective second or further headsets 100b, 100c. That is, other users will generally receive speech originating from the first user twice. The speech provided to other users via the headsets 100 (secondary path) may be delayed as compared to the speech being transmitted directly (primary path). This is because processing, transmitting, and reproducing the speech may require a certain amount of time. In some cases it may also be possible that the speech transmitted directly via the primary path is delayed as compared to the speech provided to other users via the headsets 100 (secondary path). This may be the case when processing, transmitting, and reproducing the speech is performed comparably fast and the users are located comparably far from each other such that it takes a certain amount of time for the speech to be transmitted directly from one user to another. The speech being transmitted via the primary path reaching a user at a different point in time than the speech being transmitted via the headsets 100 (secondary path) may result in an unwanted "echo" effect, where the speech received at a later point in time is perceived as an echo of the speech received at an earlier point in time. This is schematically illustrated in Figure 2, where speech originating from a first user reaching an ear of another user via a direct path (primary path) is indicated with continuous arrows, and speech originating from the first user and transmitted to other users by means of the headset arrangement (secondary path) is indicated with dashed arrows. In this example, the speech being transmitted directly via the primary path reaches the other users first.

A headset arrangement according to embodiments of the disclosure comprises a plurality of headsets 100 in a listening environment 30, each headset 100 in the plurality of headsets 100 comprising one or more loudspeakers 200, each of the one or more loudspeakers 200 being configured to radiate sound that corresponds to a sound signal towards at least one of two listening positions related to a user of the respective headset 100, each of the two listening positions being located at an entrance of an ear canal of the respective user. Each headset 100 in the plurality of headsets 100 further comprises one or more second microphones 202, each of the one or more second microphones 202 being configured to pick up noise radiated by at least one noise source via a primary path to at least one of the two listening positions, and a first microphone 204 configured to capture speech originating from a user related to the respective headset 100. In order to reduce or even avoid an "echo" effect, the headset arrangement is configured to capture speech n[n] originating from a first user related to a first headset 100a in the plurality of headsets 100 by means of the first microphone 204a of the first headset 100a, transmit the captured speech n[n] from the first headset 100a to one or more other headsets 100b, 100c in the plurality of headsets 100, reproduce the transmitted speech h[n] at respective listening positions related to users of the respective one or more other headsets 100b, 100c by means of the one or more loudspeakers 200b, 200c of the one or more other headsets 100b, 100c, and cancel speech originating from the first user and being transmitted to the listening positions related to users of the respective one or more other headsets 100b, 100c via a primary path by means of passive noise cancellation and/or an active noise cancellation method. That is, speech originating from the first user is only received at each listening position related to the users of the one or more other headsets 100b, 100c once. Speech originating from the first user and transmitted via a primary path (directly through air) will be suppressed at the listening positions.

If, for example, a headset 100 of the one or more other headsets 100b, 100c comprises ear cups or ear buds, it is generally possible to cancel speech originating from the first user and being transmitted to the listening positions related to users of the respective one or more other headsets 100b, 100c via a primary path solely by means of passive noise cancellation. That is, the ear cups or ear buds may be designed to prevent any speech transmitted via the primary path from even reaching the respective listening positions. For example, the ear cups or ear buds may comprise an acoustically damping material. However, in many cases it may be difficult or even impossible to entirely prevent speech transmitted via the primary path from reaching the respective listening positions. In many cases, the speech may only be partly damped, but may still reach the respective listening position. That is, active noise cancellation methods may be used in addition to passive noise cancellation in order to also cancel the damped speech reaching the respective listening positions. In the case of entirely open systems (e.g., headset worn on head, neck, or shoulders of a user, or arranged in a headrest of a vehicle), passive noise cancellation may not be possible at all and speech originating from the first user and being transmitted to the listening positions related to users of the respective one or more other headsets 100b, 100c via a primary can only be cancelled path by means of an active noise cancellation method.

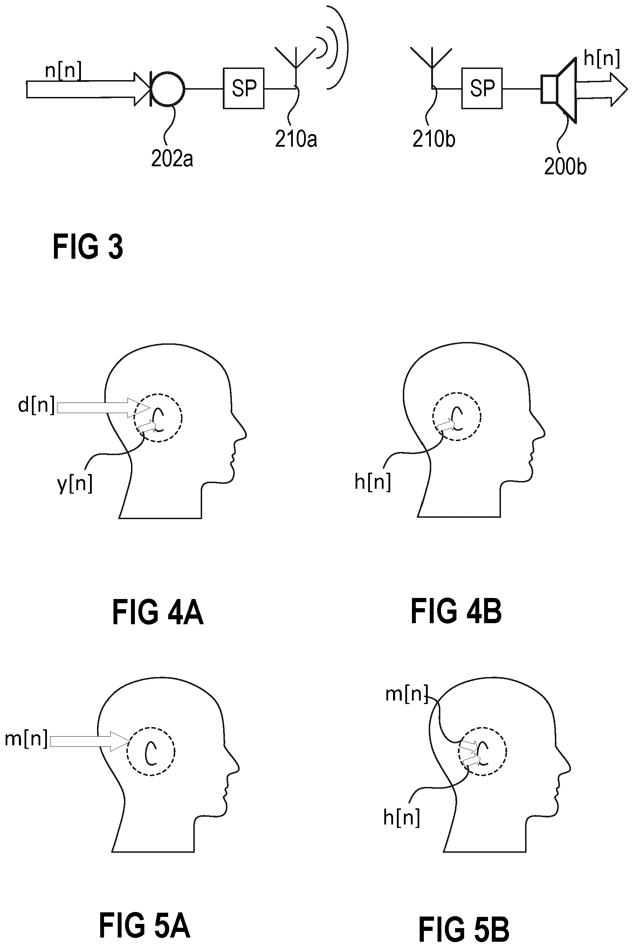

Referring to Figure 3, components required to transmit speech n[n] originating from a first user via a secondary path (via the headset arrangement) to another user are schematically illustrated. Speech n[n] originating from the first user related to a first headset 100a in the plurality of headsets 100 is captured by means of the first microphone 204a of the first headset 100a. The captured speech n[n] may subsequently be processed by suitable signal processing SP means, before being transmitted from the first headset 100a to one or more other headsets 100b, 100c in the plurality of headsets 100. Any signals may be transmitted between different headsets 100 by means of wireless transmission, for example. That is, each headset 100 in the plurality of headsets 100 may comprise one or more antennas 210 for transmitting and/or receiving signals. The transmitted speech h[n], before being reproduced at a respective listening position by means of the one or more loudspeakers 200b, may be processed by suitable signal processing SP means, for example.

A listening position generally is a position at an entrance of an ear canal of an ear of a user. A user generally has two ears such that there are two listening positions per user. When wearing a headset comprising ear cups or ear buds, the listening positions are both covered by (arranged in) the ear cups or ear buds covering (arranged in) the respective ears. Ear cups and ear buds generally also passively damp ambient noise (including speech originating from users of the headset arrangement), as they cover the respective ears, and therefore the listening positions. It is, however, often not possible to entirely avoid ambient noise from entering the ear cups or ear buds and reaching the listening positions. Any ambient noise (including speech originating from users of the headset arrangement) reaching the listening positions will be efficiently damped by means of a suitable active noise cancellation method.

An active noise cancellation method may comprise for each of the listening positions related to the users of the respective one or more other headsets 100b, 100c, capturing an error signal by means of the one or more second microphones 202b, 202c of the one or more other headsets 100b, 100c, the error signal being representative of a disturbing noise signal d[n] reaching the listening position, the disturbing noise signal d[n] comprising noise as well as the speech originating from the first user transmitted via the primary path, generating a compensation signal y[n] based on the error signal, and suppressing the disturbing noise signal d[n] at the listening position by transferring the compensation signal y[n] to the respective listening position by means of the one or more loudspeakers 200b, 200c. The disturbing noise signal d[n] and the compensation signal y[n] received at the listening position are schematically illustrated in Figure 4A. The transmitted speech h[n] reproduced at the listening position is schematically illustrated in Figure 4B.

**[0001]** ANC systems are usually intended to reduce or even cancel a disturbing signal, such as noise, by providing at a listening position a noise reducing signal that ideally has the same amplitude over time but the opposite phase as compared to the noise signal. By superimposing the noise signal d[n] and the noise reducing signal y[n], the resulting signal ideally tends toward zero.

Some headsets 100 also provide a so-called transparency function. A user, while wearing a headset 100 of the plurality of headsets 100, may want to listen to ambient sounds in order to be aware of what is happening around them. As has been described above, ambient noise, however, is cancelled by means of passive noise cancellation and/or an active noise cancellation method together with the speech originating from the first user and transmitted via the primary path. In order for a user to be aware of what is happening around them, ambient noise may be captured by means of a microphone, and may be reproduced at the listening positions by means of the one or more loudspeakers 200b, 200c. When capturing ambient noise by means of a microphone, however, speech originating from the first user and transmitted via the primary path will be captured as well. It is generally possible that speech is identified in and removed from the captured noise signal, before reproducing the signal at the listening position. Such methods, however, are often complex and difficult to implement.

The headset arrangement, therefore, may be further configured, for each of the listening positions related to the users of the one or more other headsets 100b, 100c, to determine a time offset between a time of arrival at the listening position of speech originating from the first user transmitted via the primary path, and a time when the same speech is reproduced at the listening position by means of the one or more loudspeakers 200b, 200c of the respective headset 100b, 100c. The time offset can be determined in any suitable way, e.g., manually or automatically.

Each headset 100 in the plurality of headsets 100 may be further configured, for each of the listening positions related to the users of the one or more other headsets 100b, 100c, to capture an ambient noise signal m[n] by means of at least one microphone of the respective headset 100b, 100c, the ambient noise signal m[n] comprising noise as well as the speech originating from the first user transmitted via the primary path (see Figure 5A), and reproduce the noise and the speech originating from the first user transmitted via the primary path to the listening position by transferring the ambient noise signal m[n] to the respective listening position by means of the one or more loudspeakers 200b, 200c, wherein a time between capturing the ambient noise signal m[n] and transferring the ambient noise signal m[n] to the respective listening position corresponds to the determined time offset (see Figure 5B). According to one example, the one or more second microphones 202 of a headset 100 can be used to capture the ambient noise signal m[n]. It is, however, also possible that a headset 100 further comprises at least one third microphone that is configured to capture the ambient noise signal m[n]. That is, the ambient noise signal m[n] may be captured by the same or by different microphones than the error signal.

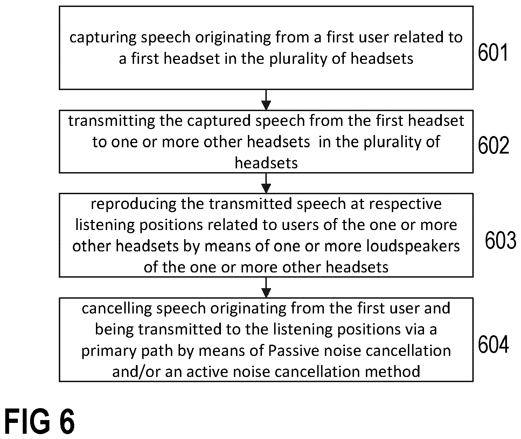

Now referring to Figure 6, a method for operating a headset arrangement according to embodiments of the disclosure is schematically illustrated. The headset arrangement comprises a plurality of headsets 100 in a listening environment 30, each headset 100 in the plurality of headsets 100 comprising one or more loudspeakers, each of the one or more loudspeakers 200 being configured to radiate sound that corresponds to a sound signal towards at least one of two listening positions related to a user of the respective headset 100, each of the two listening positions being located at an entrance of an ear canal of the respective user, one or more second microphones 202, each of the one or more second microphones 202 being configured to pick up noise radiated by at least one noise source via a primary path to at least one of the two listening positions, and a first microphone 204 configured to capture speech originating from the user related to the respective headset 100. The method comprises, capturing speech n[n] originating from a first user related to a first headset 100a in the plurality of headsets 100 by means of the first microphone 204a of the first headset 100a (step 601). The method further comprises transmitting the captured speech n[n] from the first headset 100a to one or more other headsets 100b, 100c in the plurality of headsets 100 (step 602). The method further comprises reproducing the transmitted speech h[n] at respective listening positions related to users of the respective one or more other headsets 100b, 100c by means of the one or more loudspeakers 200b, 200c of the one or more other headsets 100b, 100c (step 603), and cancelling speech originating from the first user and being transmitted to the listening positions related to users of the respective one or more other headsets 100b, 100c via a primary path by means of passive noise cancellation and/or an active noise cancellation method (step 604).

According to one example, an active noise cancellation method comprises for each of the listening positions related to the users of the respective one or more other headsets 100b, 100c, capturing an error signal by means of the one or more second microphones 202b, 202c of the one or more other headsets 100b, 100c, the error signal being representative of a disturbing noise signal d[n] reaching the listening position, the disturbing noise signal d[n] comprising noise as well as the speech originating from the first user transmitted via the primary path, generating a compensation signal y[n] based on the error signal, and suppressing the disturbing noise signal d[n] at the listening position by transferring the compensation signal y[n] to the respective listening position by means of the one or more loudspeakers 200b, 200c of a respective one of the one or more other headsets 100b, 100c.

The method may further comprise, for each of the listening positions related to the users of the respective one or more other headsets 100b, 100c, determining a time offset between a time of arrival at the listening position of speech originating from the first user transmitted via the primary path, and a time when the same speech is reproduced at the listening position by means of the one or more loudspeakers 200b, 200c.

According to one example, the method further comprises, for each of the listening positions related to the users of the respective one or more other headsets 100b, 100c, capturing an ambient noise signal m[n] by means of at least one microphone of the respective headset 100b, 100c, the ambient noise signal m[n] comprising noise as well as the speech originating from the first user transmitted via the primary path, and reproducing the noise and the speech originating from the first user transmitted via the primary path to the listening position by transferring the ambient noise signal m[n] to the respective listening position by means of the one or more loudspeakers 200b, 200c, wherein a time between capturing the ambient noise signal m[n] and transferring the ambient noise signal m[n] to the respective listening position corresponds to the determined time offset between a time of arrival at the listening position of speech originating from the first user transmitted via the primary path, and a time when the same speech is reproduced at the listening position by means of the one or more loudspeakers 200b, 200c.

It may be understood, that the illustrated systems are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and subcombinations of the various systems and configurations, and other features, functions, and/or properties disclosed. The following claims particularly point out subject matter from the above disclosure that is regarded as novel and non-obvious.

## Claims

1. A headset arrangement comprises a plurality of headsets (100) in a listening environment (30), each headset (100) in the plurality of headsets (100) comprising one or more loudspeakers (200), each of the one or more loudspeakers (200) being configured to radiate sound that corresponds to a sound signal towards at least one of two listening positions related to a user of the respective headset (100), each of the two listening positions being located at an entrance of an ear canal of the respective user, one or more second microphones (202), each of the one or more second microphones (202) being configured to pick up noise radiated by at least one noise source via a primary path to at least one of the two listening positions, and a first microphone (204) configured to capture speech originating from the user related to the respective headset (100), wherein the headset arrangement is configured to
capture speech (n[n]) originating from a first user related to a first headset (100a) in the plurality of headsets (100) by means of the first microphone (204a) of the first headset (100a);
transmit the captured speech (n[n]) from the first headset (100a) to one or more other headsets (100b, 100c) in the plurality of headsets (100);
reproduce the transmitted speech (h[n]) at respective listening positions related to users of the respective one or more other headsets (100b, 100c) by means of the one or more loudspeakers (200b, 200c) of the one or more other headsets (100b, 100c); and
cancel speech originating from the first user and being transmitted to the listening positions related to users of the respective one or more other headsets (100b, 100c) via a primary path by means of passive noise cancellation and/or an active noise cancellation method.

2. The headset arrangement of claim 1, wherein the active noise cancellation method comprises for each of the listening positions related to the users of the respective one or more other headsets (100b, 100c),
capturing an error signal by means of the one or more second microphones (202b, 202c) of the one or more other headsets (100b, 100c), the error signal being representative of a disturbing noise signal (d[n]) reaching the listening position, the disturbing noise signal (d[n]) comprising noise as well as the speech originating from the first user transmitted via the primary path;
generating a compensation signal (y[n]) based on the error signal; and
suppressing the disturbing noise signal (d[n]) at the listening position by transferring the compensation signal (y[n]) to the respective listening position by means of the one or more loudspeakers (200b, 200c).

3. The headset arrangement of claim 1 or 2, wherein the headset arrangement is further configured, for each of the listening positions related to the users of the respective one or more other headsets (100b, 100c), to
determine a time offset between a time of arrival at the listening position of speech originating from the first user transmitted via the primary path, and a time when the same speech is reproduced at the listening position by means of the one or more loudspeakers (200b, 200c) of a respective one of the one or more other headsets (100b, 100c).

4. The headset arrangement of claim 3, wherein each headset (100) in the plurality of headsets (100) is further configured, for each of the listening positions related to the users of the one or more other headsets (100b, 100c), to
capture an ambient noise signal (m[n]) by means of at least one microphone of the respective headset (100b, 100c), the ambient noise signal (m[n]) comprising noise as well as the speech originating from the first user transmitted via the primary path; and
reproduce the noise and the speech originating from the first user transmitted via the primary path to the listening position by transferring the ambient noise signal (m[n]) to the respective listening position by means of the one or more loudspeakers (200b, 200c), wherein
a time between capturing the ambient noise signal (m[n]) and transferring the ambient noise signal (m[n]) to the respective listening position corresponds to the determined time offset between a time of arrival at the listening position of speech originating from the first user transmitted via the primary path, and a time when the same speech is reproduced at the listening position by means of the one or more loudspeakers (200b, 200c).

5. The headset arrangement of any of the preceding claims, wherein each headset (100) of the plurality of headsets (100) comprises a microphone boom arm, cable, or cord, and wherein the first microphone (204) of a headset (100) is arranged in or attached to the microphone boom arm, cable or cord.

6. The headset arrangement of any of the preceding claims, wherein each headset (100) of the plurality of headsets (100) comprises two ear cups or ear buds, and one or more loudspeakers (200) and one or more second microphones (202) are arranged in each of the ear cups or ear buds.

7. The headset arrangement of any of claims 1 to 5, wherein the listening environment (30) is a passenger compartment of a vehicle, room, or hall.

8. The headset arrangement of claim 7, wherein the listening environment (30) is a passenger compartment of a vehicle, and wherein the one or more loudspeakers (200) and the one or more second microphones (202) of a headset (100) in the plurality of headsets (100) are arranged in a headrest of the vehicle.

9. A method for operating a headset arrangement, the headset arrangement comprising a plurality of headsets (100) in a listening environment (30), each headset (100) in the plurality of headsets (100) comprising one or more loudspeakers, each of the one or more loudspeakers (200) being configured to radiate sound that corresponds to a sound signal towards at least one of two listening positions related to a user of the respective headset (100), each of the two listening positions being located at an entrance of an ear canal of the respective user, one or more second microphones (202), each of the one or more second microphones (202) being configured to pick up noise radiated by at least one noise source via a primary path to at least one of the two listening positions, and a first microphone (204) configured to capture speech originating from the user related to the respective headset (100), wherein the method comprises:
capturing speech (n[n]) originating from a first user related to a first headset (100a) in the plurality of headsets (100) by means of the first microphone (204a) of the first headset (100a);
transmitting the captured speech (n[n]) from the first headset (100a) to one or more other headsets (100b, 100c) in the plurality of headsets (100);
reproducing the transmitted speech (h[n]) at respective listening positions related to users of the respective one or more other headsets (100b, 100c) by means of the one or more loudspeakers (200b, 200c) of the one or more other headsets (100b, 100c); and
cancelling speech originating from the first user and being transmitted to the listening positions related to users of the respective one or more other headsets (100b, 100c) via a primary path by means of passive noise cancellation and/or an active noise cancellation method.

10. The method of claim 9, wherein the active noise cancellation method comprises for each of the listening positions related to the users of the respective one or more other headsets (100b, 100c),
capturing an error signal by means of the one or more second microphones (202b, 202c) of the one or more other headsets (100b, 100c), the error signal being representative of a disturbing noise signal (d[n]) reaching the listening position, the disturbing noise signal (d[n]) comprising noise as well as the speech originating from the first user transmitted via the primary path;
generating a compensation signal (y[n]) based on the error signal; and
suppressing the disturbing noise signal (d[n]) at the listening position by transferring the compensation signal (y[n]) to the respective listening position by means of the one or more loudspeakers (200b, 200c) of a respective one of the one or more other headsets (100b, 100c).

11. The method of claim 9 or 10, further comprising, for each of the listening positions related to the users of the respective one or more other headsets (100b, 100c),
determining a time offset between a time of arrival at the listening position of speech originating from the first user transmitted via the primary path, and a time when the same speech is reproduced at the listening position by means of the one or more loudspeakers (200b, 200c).

12. The method of claim 11, wherein the method further comprises, for each of the listening positions related to the users of the respective one or more other headsets (100b, 100c),
capturing an ambient noise signal (m[n]) by means of at least one microphone of the respective headset (100b, 100c), the ambient noise signal (m[n]) comprising noise as well as the speech originating from the first user transmitted via the primary path; and
reproducing the noise and the speech originating from the first user transmitted via the primary path to the listening position by transferring the ambient noise signal (m[n]) to the respective listening position by means of the one or more loudspeakers (200b, 200c), wherein a time between capturing the ambient noise signal (m[n]) and transferring the ambient noise
signal (m[n]) to the respective listening position corresponds to the determined time offset between a time of arrival at the listening position of speech originating from the first user transmitted via the primary path, and a time when the same speech is reproduced at the listening position by means of the one or more loudspeakers (200b, 200c).
